(19) Europäisches Patentamt
European Patent Office
Office européen des brevets

(11) **EP 2 426 195 A1**

(12) **EUROPEAN PATENT APPLICATION**

(43) Date of publication:
**07.03.2012 Bulletin 2012/10**

(21) Application number: **11185827.0**

(22) Date of filing: **30.03.2005**

(51) Int Cl.:
*C12N 1/04* $^{(2006.01)}$     *C12N 11/14* $^{(2006.01)}$
*C12N 13/00* $^{(2006.01)}$     *A23B 9/28* $^{(2006.01)}$
*C02F 3/00* $^{(2006.01)}$

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **31.03.2004 GB 0407329**

(62) Document number(s) of the earlier application(s) in accordance with Art. 76 EPC:
**05718482.2 / 1 730 259**

(71) Applicant: **Maribo Seed International ApS**
**4960 Holeby (DK)**

(72) Inventors:
• **Pedersen, Hans Christian**
**4900 Nakskov (DK)**
• **Weiergang, Inge**
**1729 Copenhagen (DK)**

(74) Representative: **Duncan, Garreth Andrew**
**D Young & Co LLP**
**120 Holborn**
**London**
**EC1N 2DY (GB)**

Remarks:
This application was filed on 19-10-2011 as a divisional application to the application mentioned under INID code 62.

(54) **Composition**

(57) A composition comprising dried microorganisms, obtainable by a process comprising: culturing one or more species of a microorganism; admixing the cultured microorganism with one or more zeolite carriers such that the culture to carrier ratio is less than 1:4 (w/w); treating the microorganism with pulsed electromagnetic fields; incubating the culture: carrier mixture for at least 6 hours; and drying the microorganism so as to reduce the moisture level to between 1 wt % to 6 wt %. The combination of admixing the cultured microorganism with one or more carriers and treating the microorganism with pulsed electromagnetic fields results in the dried microorganisms in the composition have significantly enhanced initial survival rate and/or shelf-life.

EP 2 426 195 A1

**Description**

FIELD OF INVENTION

The present invention relates to an improved process for preparing a composition comprising dried microorganisms which results in increased microorganism viability and to the use of dried microorganism compositions prepared by the improved process.

TECHNICAL BACKGROUND

In agriculture the use of innoculants, comprising particular types of microorganisms, are known. The innoculants are typically coated onto seeds or other plant propogative material, such that once sown or planted an enhance environment which supports germination of the seed, stimulation of plant growth or biological protection of the seed and resulting plant can be established.

For example, symbiotic bacteria such as those from the genera *Rhizobium* and *Bradyrhizobium,* which enable nitrogen fixation in leguminous plants may be used to inoculate leguminous plants to aid nodule formation. Inoculation can be accomplished by coating seeds, dusting on-farm of seeds or crops or placing inoculate in-furrow at planting time.

Previous methods of producing an inoculate have included mixing an active, living microbial culture, such as a rhizobia bacterial culture, with a carrier such as humus or peat. The moist carrier maintains the microbe in a living state, However, the shelf-life of such a live bacterial culture is short due to depletion of food and moisture in the environment.

Another method of preparing innoculants is by converting the bacteria to a dormant state such as by freeze-drying the bacteria. This process must be done rapidly to prevent cell rupture.

Another method of preparing a dry, dormant inoculate is taught in US 5,695,541, which method involves culturing a species of microorganism in a growth medium, and mixing the culture with a clay carrier, followed by air drying the mixture slowly for at least about one day so the moisture level in the microorganisms is gradually reduced to form the dried composition. The dried compositions are said to have superior viability compared with other methods of preparing dry, dormant inoculate.

Pulsed electromagnetic fields (PEMF) have been taught to stimulate biological tissues, including microorganisms (see US 6,561,968). It was suggested in US 6,561,968 that the survival rate of microorganisms, such as bacteria, during drying can be improved through treatment with PEMF. However, PEMF treatment was suggested in US 6,561,968 to be useful in respect only of microorganisms which are partially dried, i.e. ones which are partially dried, but still contain about 20% water content. That is to say, US 6,561,968 only discloses the use of PEMF treatment for microorganisms which are to be maintained in a living state (for example at 20% water content the water activity ($A_w$) is still at a level (between about 1 and 0.95) where the bacterial population is in a living state as opposed to a dormant state). In addition, US 6,561,968 teaches PEMF treatment only to enable the bacteria to withstand the drying procedure better (i.e. the initial survival rate of the bacteria). No effect on the long term shelf-life of the partially dried microorganisms is reported,

The reduced survival rate and, particularly reduced shelf-life, of dried microorganisms, particularly when the water content of the dried microorganism is between about 1% to about 6% w/w, is a considerable problem.

SUMMARY OF THE INVENTION

The present invention is predicated upon the surprising finding that the combination of mixing a microorganism culture with a carrier and treatment with pulsed electromagnetic fields (PEMF) significantly enhances the shelf-life of dried microorganisms. In other words, the microorganism treated in accordance with the present invention stays alive in the dried stage for a significantly longer period of time compared with microorganisms merely dried on a carrier or compared with microorganisms treated with PEMF alone. The differences observed are synergistic.

Thus, the present invention provides in a broad aspect the use of the combination of mixing a microorganism culture with a carrier and treatment with pulsed electromagnetic fields (PEMF) in the manufacture of a composition comprising dried microorganisms. The resultant microorganisms have significantly enhanced shelf-life,

DETAILED ASPECTS

In one aspect, the present invention provides a process for preparing a composition comprising dried microorganisms, comprising culturing one or more species of a microorganism; admixing the cultured microorganism with one or more carriers; treating the microorganism with pulsed electromagnetic fields; incubating the culture: carrier mixture for at least about 6 hours; and drying the microorganism so as to reduce the moisture level to between about 1 wt % to about 6 wt %.

In a further aspect, the present invention provides a composition comprising dried microorganism prepared by the process of the present invention.

In a yet further aspect, the present invention relates to the use of a dried microorganism in the preparation of coated plant seed or other plant propogative material, comprising coating the plant seed or other plant propagative material with a composition comprising dried microorganisms prepared by the process of the present invention.

In another aspect of' the present invention there is provided the use of a dried microorganism in the preparation of a growth medium, comprising admixing the composition comprising dried microorganisms prepared by the process of the present invention with soil.

In a further aspect, the present invention provides the use of a dried microorganism in waste water treatment, comprising contacting a composition comprising dried microorganisms prepared by the process of the present invention with waste water and separating the treated water from the composition.

The dried microorganism prepared by the process of the present invention has one or more of the following properties: a better initial survival rate and increased shelf life compared with a microorganism prepared with a carrier alone and/or a microorganism prepared with the PEMF-treatment alone.

In other embodiments, the present invention provides a dried microorganism with an improved initial survival rate and/or an improved shelf life compared with a microorganism prepared with a carrier alone and/or a microorganism prepared with the PEMF-treatment alone; compositions comprising said dried microorganism; and usese thereof, including in the preparation of coated plant seeds and/or other propogative material, in the preparation of a growth medium and in waste water treatment for example.

PREFERABLE ASPECTS

Suitably, the present invention may be used for the drying of any microorganism capable of surviving in a desiccated state.

Preferably, the microorganism is in a dormant phase. Suitably, the microorganism may be in a dried or dehydrated state.

Preferably, the present invention is used to dry beneficial microorganisms for use in the agricultural industry. Of particular interest are microorganisms which have biocidal properties, such as fungicidal or pesticidal and other properties, and growth promoting microorganisms which are capable, for instance, of living in the soil in the presence of a plant to be protected.

Suitably, the microorganism according to the present invention may be one or more of fungi, including yeasts, bacteria, algae or protozoans.

Suitably, the microorganism may be a known biocidal microorganism, including the fungi *Trichoderma* and *Gliocladium*

Preferably, the microorganism is a bacterium, a fungus or a yeast.

In one aspect, preferably the microorganism is a bacterium,

In one embodiment, preferably the microorganism is a yeast from one or more of the fallowing genera *Candida, Cryptacoccus, Cystofilobasidium, Hansenula, Kluyveromyces, Leucospriidium, Metschnikowia, Pichia, Rhadosporidium, Rodotorula, Saccharomyces, Sporobolomyces, Richosporon.*

In another embodiment, preferably the microorganism is a fungus from one or more of the following genera *Acrophialospora, Ampelomyces, Aureobasidium, Bipolaris, Chaetomium, Cladorrhinum, Clonastachys, Coniothyrium, Epiececum, Gliocladium, Glomus, Fusarium, Laetisaria, Microsphaeropsis, Myccothecium, Muscador, Mycoleptodiscus, Neocosmospora, Paecilomyces, Penicillium, Peniophora, Phlebiopsis, Phialophora, Pythium, Rhizoctonia, Rhizopus, Rhynchosporium, Sporidesmium, Stephanonectria, Talaromyces, Tilletiopsis, Trichoderma, Ulocladium, Verticillium, Hinsutella, Myrothecium, Nematophthora, Dactylella, Acremonium, Catenaria, Cylindrocmpon, Dactylella, Monacrosporium, Pochonia.*

Suitably, the fungus may be one or more of the following: *Acremonium strictum, Caternaria auxiliaris, Cylindrocarpon destructans, Dacylella oviparasitica, Hirsutella rhossiliensis, Monacrosporium ellipsosporum, Monacrosporium cionopagum, Nematophthora gynophila, Paecilomyces marquandii, Pochonia chlamydosparium, Clonostachys rosea, Coniothyrium minitans, Epicaccum nigrum, Eppicoccum purpuracens, Fusarium culmorum, Fusarium oxysporum, Fusarium tabacinum, Fusarium solani, Gliocladium atrum, Gliocladium catenulatum, Gliocladium roseum, Gliocladium virens, Glomus claroideum, Glomus fasciculatum, Glomus intraradices, Glomus mossae, Laetisaria arvalis, Microsphaeropsis ochiacea, Muscador albus, Mycoleptodiscus terrestris, Mycothecium verrucaria, Necosmospora vasinfecta, Paecilomyces fumosoroseus, Paecilomyces lilacinus, Penicillium Fequentans, Penicillium godlewskii, Penicillium nigricans, Penicillium oxalicum, Peniophora gigantea, Phialophora sp. I-52, Phlebiopsis gigantea, Pythium acanthicum, Pythium acanthophoron, Pythium mycoparasiticum, Pythium nunn, Pythium oligandrum, Pythium periplocum, Rhizoctonia solani, Rhynchosporium alismatis, Rhizopus stolonifer, Sporidesmium sclerotivorum, Stephanonectria keitii, Talaromyces flavus, Tilletiopsis sp., Trichoderma asperellum, Trichoderma atroviride, Trichoderma hamatum,*

*Trichoderma harzianum, Trichoderma inhatum, Trichoderma koningii, Trichoderma lignorum, Trichoderma longibrachiatum, Trichoderma stromaticum, Trichoderma viride, Uloc/adium atrum, Verticilium chlamydosporium, Verticillium dahlia, Verticillium suchlasporium.*

In yet a further embodiment, preferably the microorganism is a bacterium from one or more of the following genera *Actinoplanes, Agrobacterium, Arthrobacter, Bacillus, Bifidobacterium, Brevibacillus, Burkholderia, Chryseomonas, Comamonas, Enterobacter, Enterococcus, Erwinia, Flavabacterium, Lactobacillus, Lactococcus, Leuconostoc, Paiitoea, Pasteuria, Paenibacillus, Pseudomonas, Rahnella, Raoultella, Serratia, Sparotrix, Stenotrophomonas, Streptococcus, Streptomyces, Rhizobium, Bradyrhizobium, Mezorhizobium, Sinorhizobium Seratia, Erwinia, Streptomycetes* and *Nocardia.*

Preferably the bacterium is a non-spore forming bacterium selected from the group consisting of *Actinoplanes, Agrobacterium, Arthrobacter, Bifidobacterium, Brevibacillus, Burkholderia, Chriseomonas, Comamonas, Enterobacter, Enterococcus, Envinia, Flavobacterium, Lactobacillus, Lactococcus, Leuconostoc, Pantoea, Pediococcus, Pseudomonas, Rahnella, Raoultella, Serratia, Sporotrix, Stenotrophomonas, Streptococcus, Streptomyces, Rhizobium, Bradyrhizobium, Mezorhizobium, Sinorhizobium Seratia, Erwinia, Streptomycetes* and *Nocardia*

Suitably, the bacterium may be one or more of the following: *Agrobacterium radiobacter, Agrobacterium tumefaciens, Arthrobacter simplex, Bacillus chitinosporus, Bacillus licheniformis, Bacillus amylofaciens, Bacillus cereus, Bacillus lentimorbus, Bacillus megaterium, Bacillus mycoides, Bacillus popilliae, Bacillus pumilus, Bacillus subtilis, Bacillus thuringiensis, Bifidobacterium bifidum, Bifidobacterium breve, Bifidobacterium lactis, Bifidobacterium longum, Bifidobacterium thermophilum, Brevibacillus brevis, Burkholderia cepacia, Chryseomonas luteola, Comamonas acidovorans, Enterobacter cloacae, Enterococcus faecium, Erwinia herbicola, Flavobacterium balustinum, Flavobacterium heparinum, Flavobacterium psycrophilium, Flavobacterium columnae, Lactobacillus acidophilus, Lactobacillus brevis, Lactobacillus bulgaricus, Lactobacillus casei, Lactobacillus coryniformis, Lactobacillus delbruekii, Lactobacillus fermentum, Lactobacillus grayii, Lactobacillus helveticus, Lactobacillus johnsonii, Lactobacillus plantarum, Lactobacillus reuteri, Lactobacillus rhamnosus, Lactobacillus salivarius, Lactococcus lactis, Lactobacillus pentosus, Lactobacillus sake, Pantoea agglomerans, Pantaea ananatis, Paenibacillus polymyxa, Pseudomonas aptata, Pseudomonas aureofaciens, Pseudomonas aeruginosa, Pseudomonas brassicacearum, Pseudomonas cepacia, Pseudomonas chlororaphis, Pseudomonas carrugata, Pseudomonas denitrificans, Pseudomonas fluorescens, Pseudomonas putida, Pseudomonas syringae, Pseudomonas tolaasii, Rahnella aqualis, Raoultella terrigena, Serratia marcescens, Serratia plymuthica, Sporotrix flocculosa, Stenotrophomonas malthophilia, Streptoccus lactis, Streptococcus salivarius, Streptococcus thermophilus, Streptomyces griseoviridis.*

Suitably, the microorganism may be a bacterium from the genus *Pseudomonas,* Suitably, the microorganism may be a *Pseudomonas fluorenscens* bacterium, Suitably, the microorganism may be a cyclic lipopeptide producing *Pseudomonas fluorenscens* bacterium

Preferably, the microorganism is cultured in an appropriate culture medium. Suitably, the microorganism may be cultured in a growth medium within a conventional fermentor or flask. Suitably, the fermentor may be a stationary, a semi-continuous or continuous fermentor. Preferably, the microorganism is cultured until the culture reaches the stationary phase.

Suitably, the culture and the culture medium may be admixed with the carrier. The microorganism culture and/or culture medium may be diluted with fresh or filtered culture medium and/or distilled water prior to being admixed with the carrier. Preferably the microorganism culture is diluted with fresh or filtered culture medium immediately prior to admixing same with the carrier.

Suitably, the admixing may be carried out in a continuous manner or in a batch-wise manner.

Preferably, the carrier is in the form of a powder or is granulated. Whether the carrier is in a powdered or granulated form may depend upon the intended use.

Suitably, a powdered carrier may have an average particle diameter of about 1 $\mu$m to about 0.5 mm for example. Suitably a granulated carrier may have an average particle diameter of about 0.5 mm to about 3 mm for example.

In one embodiment the preferred carriers are those with a large surface area, preferably those with a surface area larger than 200 $m^2$/gram, preferably larger than 300 $m^2$/gram.

In another embodiment the preferred carriers are those with a low natural water content (WC). A low natural water content is one which maintains the bacteria in a dormant state. Preferably, a low natural water content in one which is 8.0% WC or below, preferably 7,5% WC or below, preferably below about 7% WC.

Suitably, the preferred carriers may be those with a natural water content in the range of 3% to 7.5%. This may be particularly useful in applications in which the mixture is to be used in coating seeds or other propogative materials for example.

In one embodiment the preferred carrier is one which has a very high natural water content. A very high natural water content is one which sustains the bacteria in a metabolic stage. Typically, a very high natural water content may be >20% for instance.

The natural water content of the carrier is the amount of water that is bound to the cations or is carried within the pores in the natural zeolite or clay Without wishing to be bound by theory, zeolites are hydrated aluminium silicates, meaning they contain water in their basic structure, i.e. the structural formula of one clinoptilolite is $(Na,K,Ca)_{2-3}A_{13}(Al, Si)_2Si_{13}O_{36}$-12$H_2O$ which is hydrated sodium potassium calcium aluminium silicate.

The term "natural water content" as used herein means the amount of water that can be removed from the sample carrier in an oven at 105°C for 4 hours. For the avoidance of doubt, this method does not necessarily remove all water molecules from the carrier.

Preferably, the carrier according to the present invention will have a relatively stable water content over time. The stability of the water content of the carrier over time will determine the applications for which the carrier is most suitable. For instance, the moisture content of clinoptilolite and bentonite over time is relatively stable. Thus, these carriers may be particularly well suited for applications where the culture:carrier mixture may be re-used after long storage periods, for example this may make these carrier particularly well suited for use in coating seeds or other propogative materials for example. One the other hand, some carriers may have a relatively less stable water content. This may make these carriers particularly well suited for applications which utilise the culture:carrier mixture following only a short period of storage, but without prolonged storage.

One way of identifying the relative stability of the moisture content of' a carrier is to dry the carrier to a given %MC and then to measure the %MC of the carrier after 30 days following the carrier being placed in a controlled environment (i.e. controlled temperature and/or relative humidity) The loss or gain of moisture indicates the instability of the carrier. A carrier which maintains the same %MC over the 30day period is considered a very stable. The amount of moisture either taken up or lost by the carrier compared with that taken up or lost by a positive control carrier (such as bentonite or clinoptilolite) identifies the carrier's "relative" stability. Bentonite and clinoptilolite are considered as stable carriers in accordance with the present invention. A carrier which takes up more moisture or loses more moisture than either bentonite or clinoptilolite are considered to be relatively less stable carriers.

In other words, a carrier which has a moisture content which is relatively stable over time could be considered as a carrier which is capable of "buffering" moisture changes well. Whereas, a carrier which has a moisture content which is relatively unstable over time could be considered as a carrier which is incapable of buffering moisture changes. Suitably, the carrier in accordance with the present invention is a carrier which is capable of buffering moisture changes.

Suitably the carrier may be one or more of the following carriers: a zeolite carrier; a clay carrier; other earthy silicon compounds.

Zeolites are microporous crystalline solids with well-defined structures. Generally they contain silicon, aluminium and oxygen in their framework and cations, water and/or other molecules (such as ammonia, carbonate ions and nitrate ions for instance) within their pores. Many occur naturally as minerals. Others are synthetic and are made commercially. In the present invention both natural zeolites and/or synthetic zeolites may be used.

A defining feature of zeolites is that they have structures with a three-dimensional framework of linked (Si,Al)$O_4$ tetrahedrons, with (Si,Al) and O being present in the ratio of 1:2. Zeolites differ from clay-minerals due to this three-dimensional structure, where an oxygen atom is chemically balanced with a cation.

Suitably, the zeolite carrier may be one or more of the following zeolites: analcite, cancrinite, chabazite, clinoptilolite, cordierite, edingtonite, erionite, faujasite, ferrierite, ginelinite, heulandite, laumontite, levynite, mesolite, mordenite, natrolite, offretite, paulingite, phillipsite, ptilolite, scolecite, thomsonite, ZSM and ZK.

In some aspects, preferably the zeolite carrier is clinoptilolite. Suitably, the clinoptilolite used herein may be a clinoptilolite-K, clinoptilolite-Ca or a clinoptilolite-Na. Preferably, the clinoptilolite used herein is a clinoptilolite-Na. Suitably, the clinoptilolite used herein may have a natural water content of 4.7-5.4%, preferably about 5%. In one embodiment, preferably the clinoptilolite is a clinoptilolite-Na product named Klinomin™ which is obtainable from NorNatur, Denmark, Suitably, the clinoptilolite used in accordance with the present invention consists of greater than 80% clinoptilolite. Suitably the carrier may have a pH value of 6.9-7-1 and/or a surface area of 260-290m$^2$/g,

Clay is a naturally occurring hydrated aluminium silicate originally derived from the earth having physical properties due at least in part to the size and distribution of colloidal particles, and properties including plasticity. Typically, 30% or more of the particles in clay are under 0.002mn in diameter.

Suitably, the clay carrier may be one or more of the following clays: attapulgite, bentonite, fuller's earth, halloysite, illite, kaolin, pyrophyllite, vermiculite, sepiolite, montmorillonite and mulite.

In one embodiment preferably the carrier may be bentonite. Bentonite designates clays with good expansion capacity and a variable content of montmorillonite. Preferably, the main component of bentonite is montmorillonite, preferably Na-montmorillonite. One suitable bentonite for use in accordance with the present invention contains about 50% montmorillonite, 10% Kaolinite, 10% Illit and 20% vermiculite. Such a bentonite is available as OB-lergranulate from Tierra Products ApS, Denmark. For the avoidance of doubt, this in the bentonite referred to in the experimental section below.

In another embodiment preferably the carrier is vermiculite.

As will be understood by the person of ordinary skill in the art, natural clay or zeolite materials are not necessarily pure. Therefore, in some embodiments when we refer to the clay or zeolite by name, such as clinoptilolite for example, it is meant a carrier which consists mainly of this clay or zeolite (i.e. consists mainly of clinoptilolite for example). Preferably, the clay or zeolite comprises over 50% of the named clay or zeolite (such as clinoptilolite for example), preferably more than 60%, more preferably more than 70%, more preferably more than 80% of the named clay or zeolite. Suitably, the clay or zeolite may comprise more than 90% of the named clay or zeolite or even 100% of the named clay or zeolite.

Some earthy silicon compounds are not classified as either clays or zeolites. Such earthly silicon compounds include for example one or more of the following: asbestos, diaspore, diatomaceous earth, diatomite, feldspar, guhr, kieselguhr, mica, quartz, sand and silica.

In one aspect, suitably the carrier may be a combination of one or more clay carriers with one or more zeolite carriers.

Without wishing to be bound by theory it is envisaged that certain species of microorganism may have a preferable carrier, i.e. may survive better in certain carriers. Once a person of ordinary skill in the art had been taught the present invention, it would be well within their routine repertoire to be able to identify a preferable carrier for any given microorganism. One way to achieve this would be to carry out the following assay:

1. Determine the natural water content of the carriers by incubating the carriers at 105°C for 4 hrs.
2. Mix a liquid microbial culture with the different carriers in the ratio 1:5.
3. Incubate for 1-2d to allow bacteria to grow.
4. Dry the MicxCarriers to 1,5x, 1x, 0,75x (or more points) of the natural water content determined in (1) followed by grinding to a fine powder.
5. Incubate for >7days at room temp.
6. Count the CFU by platings. The preferred carriers are the ones that carriers high numbers of microorganisms over the given range
7. Optionally - once a set of preferred carriers are determined, the relation between WC and $A_w$ may be determined. Preferred carriers are those, where the $A_w$ does not change (or only slightly changes, i.e. changes that can be tolerated by the microorganisms carried) under given storage conditions over time.

Notably, the preferred clay/zeolite carriers are those which have a natural water content similar to the final moisture content in the culture:carrier mixture post-drying - typically in the range 3% to 7,5% (w/w) for seed application purposes and/or are those which have a relatively stable moisture content over time.

In a further embodiment, the distribution of microorganisms in the carrier is preferably uniform. The uniformity of the distribution of microorganisms in a carrier may be determined by spray coating the carrier onto a surface and determining the number of microorganisms per area-unit.

Preferably, the cultured microorganism and the carrier are blended such that the culture to carrier ratio is between about 1:2 to about 1:6 (w/w), preferably about 1:3 to about 1:5 (w/w), more preferably less than 1:4 (w/w), such as 1:4.1, 1:4.2, 1:4.5, 1:4.75 or about 1:5 for example.

In one embodiment, preferably the cultured microorganism and the carrier are blended such that the culture to carrier ratio is less than 1.5 (w/w).

Without wishing to be bound by theory, it has been surprisingly found that the lower the proportion of microorganism culture to carrier the better the number of viable culturable cells (colony forming units (CFUs) in the dried carrier). It has been found that preferably the cultured microorganism and the carrier are blended such that the culture to carrier ratio is less than 1:4 (w/w), suitably less than 1:4.1, 1:4.2, 1:4,5, 1:4.75 or 1:5 for example.

In order to prepare a standard carrier formulation, suitably the following method steps may be undertaken: the microbial cells may be admixed with the carrier in a proportion of microbial cells:carrier of less than 1.4 (w/w), suitably less than 1:4.1, 1:4.2, 1:4.5, 1:4.75 or 1:5 for example; the mixture may be placed at 10°C for 7 days and then the mixture may be dried to 5% water content or less in a period of 3 to 4 days in a controlled atmosphere of 32.5-35% humidity.

Suitably the concentration of microorganism (for example bacteria) in the microorganism culture immediately prior to admixing with the carrier is approximately $10^7$-$10^9$ microorganisms/ml of culture medium, preferably approximately $10^8$ microorganism/ml of culture medium.

Suitably, if the carrier is dry (i.e. has 0% water content), for instance following oven sterilisation, a small aliquot of water and/or culture medium may be added before blending the cultured microorganism with the carrier. Suitably the water and/or culture medium is added until the moisture content in the carrier is that which is considered natural for that carrier. The addition of water and/or culture medium prevents cell damage due to heat generation during admixing. If deemed necessary, trapped air in the carrier may be removed by vacuum.

Preferably, after admixing the culture:carrier mixture the mixture is incubated for more than about 6 hours, preferably more than about 8 hours, preferably more than 12 hours, preferably more than about 18 hours, preferably from 0.5 to 14 days. Much by preference the culture:carrier mixture is incubated for more than about 12 hours, Suitably, the culture:carrier mixture is incubated from between about 12 hours to about 14 days.

Suitably, after admixing the culture:carrier mixture may be incubated at 5°C-30°C, preferably 10°C-15°C, for between about 0 to about 14 days, preferably between 0.5 to about 14 days. During the incubation the microorganisms are allowed to grow and multiply. Preferably, if the culture:carrier mixture is incubated for more than one day no dehumidication occurs during this incubation period.

Suitably, the pulsed electromagnetic field (PEMF)-treatment may be carried out at any time during the process. For instance, the PEMF-treatment may be carried out at one or more of the following stages: during the culturing of the microorganism; during admixing the cultured microorganism with the carrier; after admixing the cultured microorganism with the carrier; during the (optional) incubation of the culture:carrier mixture; during drying of the culture:carrier mixture; during storage of the dried culture:carrier mixture; after application onto seeds or seed components; at any time after drying of the culture:carrier mixture; at any time after re-hydration of the dried culture:carrier mixture.

In one embodiment, preferably the PEMF-treatment is carried out during the culturing of the microorganisms.

In another embodiment, suitably the PEMF-treatment may be carried out during the culturing of the microorganisms and optionally again during the incubation of the culture:carrier mixture.

Suitably, there may be more than one PEMF-treatment. In one embodiment there may be more than two PEMF-treatments.

In one embodiment, microorganisms may be cultured in a continuous fermentor and may be exposed to PEMF-treatment in one area of the fermentor prior to all or some of the culture being further treated, optionally with some of the culture being recirculated to the fermentor. Typically, the microorganisms could be exposed to the PEMF whilst passing through a conduit (such as a tube, suitably a wound tube) from the fermentor.

Suitably, each PEMF treatment may be from between about 0.5 h to about 48 h, preferably between about 4 h to about 24 h, preferably between about 8 h to about 16 h.

In one aspect preferably the bacterial culture is PEMF-treated for 1-16 hours immediately before the bacterial culture is mixed with the carrier.

It is envisaged, however, that each PEMF treatment may be comprised of a number of PEMF treatments each treatment being a few minutes in duration (i.e, 1-20 minutes, preferably 1-10 minutes, more preferably 1-5 minutes). Suitably, the microorganisms may be exposed to more than one treatment, preferably more than two, preferably more than three, preferably more than four, preferably more than five, preferably more than six, preferably more than seven, preferably more than eight, preferably more than nine, or preferably more than ten treatments.

As will be appreciated by person's skilled in the art any apparatus which causes pulsed electromagnetic fields (PEMFs) may be used in the process of the present invention.

One such apparatus is taught in US 6,561,968 (which reference is incorporated herein by reference). The apparatus in US 6,561,968 includes a plurality of electrically conducting coils each having a centre axis, each centre axis being directed into the microorganisms; and a pulse generator operationally connected to each coil for supplying a series of current pulses for conduction in each coil, the series of pulses being adapted to generate a periodically varying magnetic field from each coil for inducing an electrical field. In the apparatus of US 6,561,968 a number of pairs of coils exist, each pair of coils including a first coil and an adjacent second coil. For a given pulse supplied by the pulse generator, the magnetic field at the centre of the first coil is directed toward the microorganisms and the magnetic field at the centre of the second coil is directed away from the microorganisms

The centre axis of a coil is the symmetry axis normally directed along the central axis of a tubular coil or perpendicularly (positioned centrally) to a plane of a flat coil.

As the PEMF apparatus may generate heat, it is envisaged that the apparatus may additionally comprise a cooling mechanism.

Pulse-type electromagnetic fields (PEMF) are the most frequently used type of electomagnetic therapy, especially for bone healing, treatment of arthritis, and sports and repetitive stress injuries Many different commercial types of PEMF apparatus have been reported for use in health care. By way of example only one such PEMF apparatus is the Curatron 2000-series; Wavetek; Bi Osteogen apparatus. A skilled person would be readily aware of other PEMF-apparatus. It is envisaged that any of these apparatus may be used in accordance with the present invention.

Preferably, the microorganism is dried to a moisture content close to the natural moisture content of the carrier, typically that is between about 3 to about 6% (w/w).

Preferably, the microorganism culture:carrier mixture is dried Suitably, the microorganism culture:carrier mixture is dried to a moisture content close to the natural moisture content of the carrier, that is between about 1 wt% to about wt%, preferably about 3 wt% to about 6 wt%

Without wishing to be bound by theory it has been found surprisingly that PEMF-treatment of cells in a carrier with less than 6 wt% water, i.e. where the $A_w$ (water activity) is less than about 0.7, suitably less than about 0.5, increases the shelf-life of the microorganism (particularly bacteria) considerably. It has been found that the shelf-life can be increased for example to more than 1 year for instance.

Water activity ($A_w$) indicates the relative availability of water to the bacteria in the mixture. A water activity of 1 or close thereto indicates that the bacteria are not dormant, but are in a living state; whereas a water activity of less than 0.9, preferably less than about 0.7, means that microorganism would be dormant. Likewise, a water activity of about 0.4 to 0.6 means that the bacteria would be dormant. Preferably, in accordance with the present invention the water activity of' the dried culture:carrier mixture is less than 0.9, preferably less than about 0.7, preferably about 0.4 to 0.7, preferably about 0.6.

In the present invention, it has for the first time been shown that PEMF-treatment can be used to prolong the shelf-life of dried, dormant microorganisms.

Preferably, the microorganism and/or microorganism culture:carrier mixture is air dried. Suitably, forced-air drying may be used. For example, the culture:carrier mixture may be placed in a laminar air flow bench over the outlet grids. In which case the drying may occur in less than 1 day, preferably within about 16 hours. Alternatively simply room-air drying in trays or similar containers may be used. Room-air drying is preferably conducted at a temperature of about 10°C-30°C, typically about 20°C-24°C, and a relative humidity of less than 75%, preferably about 30-60%, more preferably about 32.5-35%. With room-air drying the drying may take between 1 and 5 days, preferably between 1 and 4 days, suitably 3-4 days. Suitably, during room-air drying it may be advantageous on microorganism survival to have $Ca^{2+}$ ions in the atmosphere. As a yet further alternative, drying may be carried out by placing the culture:carrier mixture in a bag, for example a Milli-Wrap$^{RTM}$ bag, which bag allows moisture to evaporate.

The moisture level is gradually reduced to between about 1% to about 6% (w/w).

The drying step may be carried out under non-aseptic conditions.

The process according to the present invention may comprises further steps of milling the composition of microorganism culture:carrier mixture and/or coating seeds or other propagative material with the composition.

The dried product may be milled using an air classifier mill to a final particle size of about 0.1 to about 150 microns, for instance.

In one embodiment, suitably the culture:carrier mixture may be incubated at about 10-15°C and at a moisture content of about 18-33% (wet weight), followed by drying at 20 deg C over saturated calcium chloride for 3-4 days, giving a relative moisture of approximately 32.5% or followed by quick drying in less than 24 hours. The moisture content of the culture:carrier mixture may be reduced to between about 4 to about 7%,

In one embodiment the pH of the carrier or the pH of the microorganism culture:carrier mixture is between about 6 to about 9, preferably about 7 to about 9, more preferably about 8 to about 9, more preferably about 8.2 to about 8.8, more preferably about 8.6.

In one embodiment, it is preferable to add as little fluid as possible to the carrier. In general in some instances, too much culture medium may mean a decrease in the survival rate of bacteria in the dry carrier.

ADVANTAGES AND SURPRISING FINDINGS

It has been found that microorganisms treated in accordance with the process of the present invention survive the drying significantly better, i.e. have a better initial survival rate, than if a carrier alone is used and/or if the PEMF-treatment alone is carried out. In particular, however, it has been found that the combination of the carrier together with the PEMF-treatment makes the microorganisms survive for a significantly longer time period and better in the dried stage, i.e. increases the shelf-life of the dried microorganism. Surprisingly and unexpectedly the combined effect of these treatments, particularly on the shelf-life of the dried microorganism, is synergistic compared with either treatment alone.

By the term "initial survival rate" as used herein we mean the microorganisms ability to withstand the actual drying process when tested immediately after drying, i.e. from 0 to about 14 days, suitably from 1 to about 5 days, suitably 2 days, after drying and irrespective of whether the dried microorganism or dried culture:carrier mixture has been coated on to a seed or other propogative material for instance.

By the term "shelf-life" of the dried microorganism as used herein we mean the microorganisms ability to grow and/or proliferate once rehydrated following storage for extended periods of time, i.e. the microorganisms ability to be survive and be reactivated by rehydration and to be viable culturable cells, after storage in the dried state over a prolonged period of time (for example for at least 24h, at least 48h, at least 6 months, or at least 12 months).

To enhance the initial survival rate and/or shelf-life yet further, osmoprotectants or cell stabilisers may be added to the culture. For instance, the addition of 10-100mM sucrose to the culture may enhance the number of surviving microorganisms, for example *Pseudomonas* spp, by approximately 10-fold. Other known protestants and cell stabilisers include amino acids and their derivatives, choline, ectoine, divalent cations, carbohydrates, glycerols, gums, antioxidants, not fat milk solids, crystalline cellulose, carboxy methyl cellulose (CMC) and CMC derivatives.

In accordance with the present invention, root colonising antagonistic *Pseudomonas* bacteria, dried using the method of the present invention and coated onto pelleted sugar beet seeds, can survive on the seeds in sufficiently high numbers for more than 1½ years and still regain their biological antagonism against pathogens and their root colonising characteristics.

USES

The composition comprising dried microorganisms prepared by the process of the present invention may be used for the application of one or more of the following to seeds or other plant propogative material: bio-control agents; growth stimulating agents; fungicides; pesticides.

The composition comprising dried microorganisms prepared by the process of the present invention may be applied direct to growth media in greenhouses and in soil.

In addition, the composition comprising dried microorganisms prepared by the process of the present invention may be used for cleaning of waste water and/or cleaning-up of chemical/biological spills, such as spills on farms for instance. Alternatively, when the composition comprises bioremediating competent microorganisms, the composition may be used to clean contaminated solids, such as PCB-contaminated soils for instance. Bioremediating competent microorganisms are well known and can be any microorganism which is able to degrade toxic compounds, including but not limited to genetically modified microorganisms.

Alternatively, the composition comprising dried microorganisms prepared by the process of the present invention may be used for the application of a microorganism to a foodstuff and/or an animal feedstuff. Suitable microorganisms for use in the food industry are well known and may be for example lactic acid bacteria.

In addition, the composition comprising dried microorganisms prepared by the process of the present invention may be used in medical applications, for example in the provision of lactic acid bacteria for instance.

SYNERGISTIC EFFECT

The combination of mixing a microorganism culture with a carrier and treatment with pulsed electromagnetic fields (PEMF) in the manufacture of a composition comprising dried microorganisms results in a synergistic effect on the initial survival rate and/or shelf-life of the microorganisms.

Synergy may be determined by observing the number of viable culturable microbial cells following the following treatments: a) admixing a microorganism culture with a carrier; b) treating with PEMF; or c) a combination of a) and b). Synergy is indicated when the combination (c) produces a better effect (i.e. more viable culturable cells when evaluating initial survival rate and/or when evaluating shelf-life of the microorganisms) that either of the treatments (a) or (b) separately. Preferably, the combination treatment (c) results in more viable culturable microbial cells when evaluating initial survival rate and/or when evaluating shelf-life of the microorganisms compared with the amount of viable culturable microbial cells produced by treatment (a) added to the amount of viable culturable microbial cells produced by treatment (b).

FOODSTUFF

The term "foodstuff" as used herein is used in a broad sense - and covers food for humans as well as food for animals (i.e. feed). In a preferred aspect, the foodstuff is for human consumption,

The food may be in the form of a solution or as a solid - depending on the use and/or the mode of application and/or the mode of administration.

FOOD INGREDIENT

The composition of the present invention may be used as a food ingredient.

As used herein the term "food ingredient" includes a formulation, which is or can be added to functional foods or foodstuffs and includes formulations which can be used at low levels in a wide variety of products that require, for example, acidifying or emulsifying.

The food ingredient may be in the form of a solution or as a solid - depending on the use and/or the mode of application and/or the mode of administration.

FOOD SUPPLEMENTS

The composition of the present invention may be - or may be added to - food supplements.

FUNCTIONAL FOODS

The composition of the present invention may be - or may be added to - functional foods.

As used herein, the term "functional food" means food which is capable of providing not only a nutritional effect and/or a taste satisfaction, but is also capable of delivering a further beneficial effect to consumer.

Although there is no legal definition of a functional food, most of the parties with an interest in this area agree that they are foods marketed as having specific health effects.

FOOD PRODUCTS

The composition of the present invention can be used in the preparation of food products such as one or more of: confectionery products, dairy products, meat products, poultry products, fish products and bakery products.

By way of example, the composition of the present invention can be used as ingredients to soft drinks, a fruit juice or a beverage comprising whey protein, health teas, cocoa drinks, milk drinks and lactic acid bacteria drinks, yoghurt, drinking yoghurt and wine.

The present invention also provides a method of preparing a food or a food ingredient, the method comprising admixing the composition produced by the process of the present invention or the composition according to the present invention with another food ingredient. The method for preparing or a food ingredient is also another aspect of the present invention.

PHARMACEUTICAL

The composition produced by the process of the present invention and/or the composition according to the present invention may also be used as - or in the preparation of - a pharmaceutical. Here, the term "pharmaceutical" is used in a broad sense - and covers pharmaceuticals for humans as well as pharmaceuticals for animals (i.e.. veterinary applications). In a preferred aspect, the pharmaceutical is for human use and/or for animal husbandry.

The pharmaceutical can be for therapeutic purposes - which may be curative or palliative or preventative in nature. The pharmaceutical may even be for diagnostic purposes.

When used as - or in the preparation of - a pharmaceutical, the composition of the present invention may be used in conjunction with one or more of: a pharmaceutically acceptable carrier, a pharmaceutically acceptable diluent, a pharmaceutically acceptable excipient, a pharmaceutically acceptable adjuvant, a pharmaceutically active ingredient.

The pharmaceutical may be in the from of a solution or as a solid - depending on the use and/or the mode of application and/or the mode of administration.

PHARMACEUTICAL INGREDIENT

The composition produced by the process of' the present invention and/or the composition of the present invention may be used as pharmaceutical ingredients. Here, the product and/or the composition of the present invention may be the sole active component or it may be at least one of a number (i.e. 2 or more) active components.

The pharmaceutical ingredient may be in the from of a solution or as a solid - depending on the use and/or the mode of application and/or the mode of administration.

The pharmaceutical ingredient may be in the from of an effervescent products to improve the dissolving properties of the pharmaceutical

CHEMICAL INDUSTRY

The composition produced by the process of the present invention and/or the composition of the present invention may also be used as a bioremediation agent, i.e. to consume and breakdown environmental pollutants

FORMS

The composition produced by the process of the present invention and/or the composition of the present invention may be used in any suitable form.

Suitable examples of forms include one or more of: tablets, pills, capsules, ovules, solutions or suspensions, which may contain flavouring or colouring agents, for immediate-, delayed-, modified-, sustained-, pulsed- or controlled-release applications.

By way of example, if the product and/or the composition are used in a tablet form - such as for use as a food ingredient - the tablets may also contain one or more of: excipients, disintegrants, granulation binders, or lubricating agents.

Examples of nutritionally acceptable carriers for use in preparing the forms include, for example, water, salt solutions, alcohol, silicone, waxes, petroleum jelly and the like.

Preferred excipients for the forms include lactose, starch, a cellulose, milk sugar or high molecular weight polyethylene glycols.

For aqueous suspensions and/or elixirs, compositions produced by the process of the present invention and/or the composition of the present invention may be combined with various sweetening or flavouring agents, colouring matter or dyes, with emulsifying and/or suspending agents and with diluents such as water, ethanol, propylene glycol and glycerin, and combinations thereof

The forms may also include gelatin capsules; fibre capsules, fibre tablets etc.

EXAMPLES

The present invention will now be described, by way of example only, in which reference may be made to the following figures:

Figure 1 shows the initial survival rate and shelf-life of dried *Pseudomonas fluorescens* (0-544 days post-treatment) coated onto pelleted sugar beet seed, following treatment with PEMF (55V) for 0, 8, 16 or 48 h and admixing with a zeolite carrier prior to slow drying over 4 days;

Figure 2 shows the initial survival rate and shelf-life of dried *Pseudomonas fluorescens* (0-544 days post-treatment) coated onto pelleted sugar beet seed, following treatment with PEMF (55V) for 0, 8, 16, 24 or 48 h and admixing with a zeolite carrier prior to rapid drying; and

Figure 3 shows the average percentage survival of *Pseudomonas fluorescens* compared with moisture content of the carrier.

**EXAMPLE I - Effect of PEMF-treatment in combination with carriers on initial survival rate and shelf-life of dried microorganisms**

*Pseudomonas fluorescens* strain DS96.578 was cultured overnight in liquid LB to near stationary phase, diluted 10x with fresh LB and mixed into a clinoptilolite carrier (clinoptilolite-Na available as Klinomin™ from NorNatur, Denmark) in the ratio 1:2. The mixture was then dried to approx. 22% moisture content by air drying in a laminar airflow bench, bagged and incubated for 10days at 10°C at approx. 22% (w/w) moisture level. At the end of the period, the carrier was exposed to an pulsating electromagnetic field treatment (PEMF-treatment - 2mV/cm at 50Hz) at 55 volts (55V) for different periods of time (8, 16, 24 and 48 hours) or was not exposed to PEMF-treatment (0 hours). The PEMF apparatus was the apparatus taught in US6,561,968 During the incubation period the bacterial populations grew to between $2\times10^8$ and $7.1\times10^8$ bacteria/gram zeolite. The culture:zeolite mixture was then dried to 3%-6% (w/w) moisture content before coating onto pelleted sugar beet seeds Drying the culture:zeolite mixtures to 3%-6% (w/w) was done either within 16hours by forced air drying or dried slowly by placing the mixture in a chamber with about 35% relative humidity for 4 days.

The survival (including initial survival rate and shelf-life) of the bacterium on the sugar beet seeds was evaluated (based on the colony forming units (CFU)/seed) at 2, 71 and 544 days after treatment

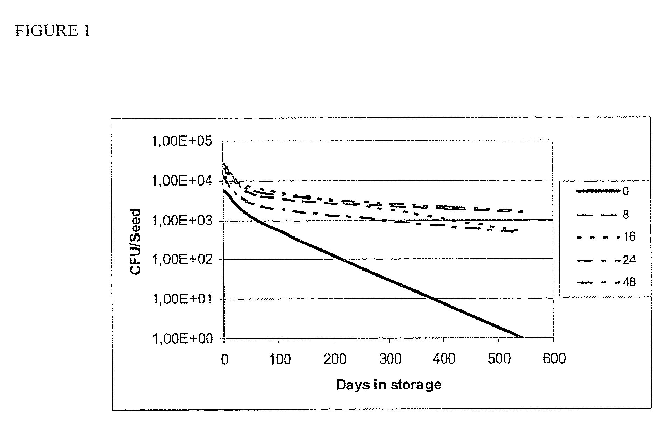

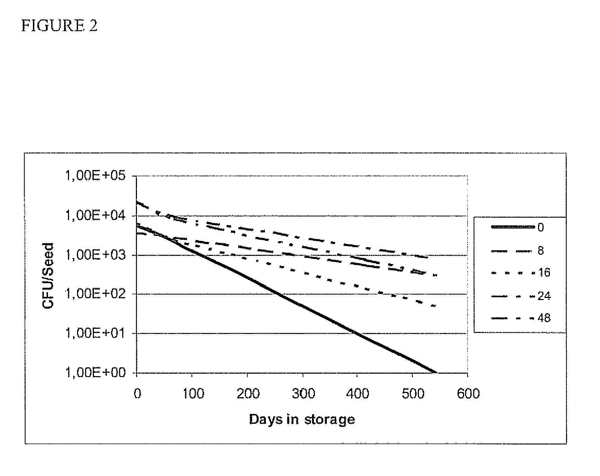

The results are presented in the table below and graphically in Figure 1 (Slow drying) and Figure 2 (Fast drying)

| Drying Procedure | PEMF-Treatment | storage (days) at 10 deg C | | |
|---|---|---|---|---|
| | | 2d | 71d | 544d |
| Fast | 0 h | $5,50\times10^3$ | $2,15\times10^3$ | 0 |
| | 8 h | $3,50\times10^3$ | $2,65\times10^3$ | $3,00\times10^2$ |
| | 16 h | $6,30\times10^3$ | $2,40\times10^3$ | $5,00\times10^1$ |
| | 24 h | $2,10\times10^4$ | $9,50\times10^3$ | $8,00\times10^2$ |
| | 48 h | $2,30\times10^4$ | $8,00\times10^3$ | $3,00\times10^2$ |
| Slow | 0 h | $5,65\times10^3$ | $8,50\times10^2$ | 0 |
| | 8 h | $2,40\times10^4$ | $4,00\times10^3$ | $1,50\times10^3$ |
| | 16 h | $1,30\times10^4$ | $6,40\times10^3$ | $5,00\times10^2$ |
| | 24 h | $1,02\times10^4$ | $2,30\times10^3$ | $4,50\times10^2$ |
| | 48 h | $1,90\times10^4$ | $5,00\times10^3$ | $1,65\times10^3$ |

As can be seen from the Figures, PEMF-treatment (2mV/cm at 50Hz, 55V) in combination with carrier enhances the initial survival as well as the shelf-life of the dried seed coated bacteria over time. In contrast to seeds coated with PEMF-treated carriers, no colony forming bacteria could be isolated after 544 days of storage from seeds coated with culture:carrier mixtures not treated with PEMF.

## EXAMPLE 2: Effect of PEMF-treatment in combination with carriers on initial survival rate and shelf-life of dried microorganisms

*Pseudomonas fluorescens* strain DS96.578 was cultured overnight in liquid LB. Following the liquid culture, the bacterial culture was diluted 10 times with fresh LB-medium and mixed with sterilised Clinoptilolite in the ratio 50ml bacterial culture to 100g Clinoptilolite (1:2). After gently mixing, the 1:2 culture:Clinoptilolite mixture was slowly airdried to 123g. The bacterial culture:Clinoptilolite mixture was then incubated at 10°C for 10days. At the end of the incubation period, the culture:Clinoptilolite mixture was divided into two equal portions, one of which was exposed to a 50V PEMF-treatment (2mV/cm at 50Hz, 55V) for 16 hours, whereas the other portion was treated in the same way except it was not exposed to PEMF. Following this treatment the bacterial culture:Clinoptilolite mixtures were dried to 4-6% moisture content (w/w) by placing the mixtures at trays in an atmosphere with 35% humidity for 4 days. The dried carrier was incubated at 10°C Number of bacteria able to form colonies on solid LB-medium was determined by dissolving 1g of the mixture in 10ml 0,9%NaCl and plating 100microlitre of this solution on solid LB.

The number of colony forming bacteria in the carrier after 0, 73, 121, 182 and 408 days are given in the table below.

|  | CFU/g carrier | |
|---|---|---|
| Storage (Days) | No PEMF | PEMF 16hrs |
| 0 | $1,55x10^8$ | $3,20x10^8$ |
| 73 | $1,40x10^8$ | $1,70x10^8$ |
| 121 | $1,60x10^8$ | $1,70x10^8$ |
| 182 | $8,95x10^7$ | $4,30x10^8$ |
| 408 | $3,50x10^7$ | $2,05x10^8$ |

As can be seen from the table, the bacteria survive well for many months in the dried carriers, After about half a year the number of bacteria in the carrier, that was not treated with PEMF (2mV/cm at 50Hz, 55V) starts to decrease, whereas the number of colony forming bacteria stays at approximately the same high level for more than a year Obviously, PEMF-treatment of bacteria mixed into a carrier followed by drying of the mixture to a level where the water activity is below a level allowing active growth of the bacteria results in an enhanced storability of the bacteria able to form colonies after rehydration.

## EXAMPLE 3: Comparison of two carriers: Clinoptilolite with Sepiolite

*Pseudomonas fluorescens* strain DS96.788 (Rif resistant) was cultured overnight in liquid Luria-Bertoni (LB) medium, diluted 10 times with fresh LB-medium and the diluted culture was blended into the following carriers (Clinoptilolite and Sepiolite) by an approx 1:1 (w/w) culture:carrier mixture. The carriers were then dried down to approx. 25% moisture content (w/w) and incubated for 10days at 10°C. Following this, the carriers were dried to different moisture levels between 10% and 25% and incubated at 10°C for additional 23 days. Platings on solidified agar determined CFU/g carrier:

| Moisture content in carrier (w/w) Ranked approx Same level Clinoptilolite - Sepiolite | Clinoptilolite | Sepiolite |
|---|---|---|
| 24,7%-236% | $16x10^8$ | $8.9x10^7$ |
| 20.6%-19 0% | $5.6x10^7$ | $1.1x10^8$ |
| 16.9%-17.2% | $2.9x10^8$ | $8.2x10^7$ |
| 15.0%-15,0% | $11x10^8$ | $5.6x10^3$ |
| 14.4%-13.7% | $1.6x10^8$ | $1.8x10^6$ |

(continued)

| Moisture content in carrier (w/w) Ranked approx Same level Clinoptilolite - Sepiolite | Clinoptilolite | Sepiolite |
|---|---|---|
| 11.6% -11.6% | $1.6 \times 10^8$ | $4.4 \times 10^4$ |

As can be seen from the above example the number of colony forming bacteria per gram of carrier is relatively stable at around $10^8$ bacteria/g of clinoptilolite at the different moisture contents in the carrier, whereas the number of colony-forming bacteria in the Sepiolite carrier is decreased in carriers with lower moisture content.

## EXAMPLE 4: Bacterial survival in different carriers.

Bacterial survival as colony forming units was investigated in three different carriers: Vermiculite, Bentonite, and Clinoptilolite. Bentonite and vermiculite are both representatives of clays. Clinoptilolite (Clinoptilolite-Na) is a zeolite. Two cultures of *Pseudomonas fluorescens* strain DS96.578 were grown overnight in LB supplemented with 50mM sucrose. One of the cultures was exposed to a 50V PEMF-treatment (2mV/cm at 50Hz, 55V) the last 8 hours of the culture At the end of the culture, the bacterial cultures were diluted 10 times with fresh culture medium and 23ml culture mixed with 100g pre-sterilised carriers. The carriers were then incubated at 10°C for 6days. On the 6th day the carriers with non-PEMF treated bacteria were divided into two equal portions, one of which was PEMF-treated (16hrs, 50V), the other not. At day 7 all carriers were again divided into two, of which one part was air-dried overnight in filterbags, whereas the other part of the carriers were dried slowly by placing them in a chamber with about 35% relative humidity for 4 days. The drying processes resulted in carriers having a moisture content slightly above their natural moisture contents. After drying the carriers were coated onto pelleted sugar beet seeds: 60g of carriers was used per 100,000 seeds. For the individual steps the number of colony forming units as determined by duplicated platings is given in the table below. The data on CFU/seed is from coating of seeds with slowly dried carriers.

CFU in bacterial culture at time of mixture with carrier was $7.55 \times 10^7$ CFU/ml for the untreated culture and 6 $65 \times 10^7$ CFU/ml for the PEMF-treated culture.

The same concentrations of bacteria were present in the bacterial cultures in the treatments with no carrier material. In these treatments the bacterial cultures, without admixing with a carrier, were coated onto the seed and the CFU/seed at day 2 after coating was evaluated as per the remainder of the treatments and the % survival was calculated accordingly.

| Carrier material | WC[1] (%) | PEMF treatment | WC[1] (%) | $A_u$[3] | CFU/g carrier before drying | CFU/g carrier after drying and moisture content (MC) in the dried carriers | | | | CFU/seed day 2 after coating | % surv[2] |
|---|---|---|---|---|---|---|---|---|---|---|---|
| | | | | | | Fast drying | MC | Slow drying | MC | | |
| Clinoptilolite | 4,8 | None | 5 9 | 0 678 | $4.35 \times 10^6$ | $9.15 \times 10^6$ | 6.0 | $9.05 \times 10^6$ | 7.0 | $5.5 \times 10^4$ | 10% |
| | | Culture | 4 8 | 0 664 | $6.80 \times 10^6$ | $2.95 \times 10^6$ | 6.0 | $5.35 \times 10^8$ | 5.0 | $9.5 \times 10^4$ | 30% |
| | | Carrier | 5.6 | 0.680 | $1.49 \times 10^9$ | $1.80 \times 10^8$ | 7.0 | $2.18 \times 10^9$ | 5,0 | $3,9 \times 10^5$ | 30% |
| Venniculite | 3 8 | None | 4.3 | 0 437 | $1.59 \times 10^9$ | $3.5 \times 10^8$ | 6.0 | $1.54 \times 10^9$ | 6,6 | $9,5 \times 10^4$ | 10% |
| | | Culture | 3,6 | 0 452 | $1,9 \times 10^9$ | $2,80 \times 10^8$ | 6,0 | $1.22 \times 10^9$ | 6,0 | $1,2 \times 10^5$ | 16% |
| | | Carrier | 4,1 | 0,461 | $1,93 \times 10^9$ | $2,30 \times 10^6$ | 5.0 | $9,25 \times 10^6$ | 7,6 | $7,5 \times 10^4$ | 14% |
| Bentonite | 3,5 | None | 5,6 | 0 642 | $4,20 \times 10^9$ | $1,51 \times 10^9$ | 5,0 | $2,04 \times 10^9$ | 5,8 | $2,4 \times 10^5$ | 19% |
| | | Culture | 5,4 | 0,655 | $2,85 \times 10^9$ | $1,46 \times 10^9$ | 5.0 | $2,10 \times 10^9$ | 5,8 | $7,6 \times 10^5$ | 60% |
| | | Carrier | 5,8 | 0,649 | $1,84 \times 10^9$ | $9,95 \times 10^8$ | 5,0 | $7,80 \times 10^8$ | 5,2 | $1,7 \times 10^5$ | 36% |
| None | N/A | None | N/A | N/A | N/A | N/A | N/A | N/A | N/A | 0 | 0 |
| | | Culture | N/A | N/A | N/A | N/A | N/A | N/A | N/A | 0 | 0 |

1. WC[1]: The natural water content (WC) in the used carrier material.
2. % surv: Percentage of expected number of colony forming units as calculated by the formula:

$$(CFU/seed) \times 100,000 seeds/(CFU/g\ carrier \times 60).$$

3. $A_w$ measured by Testo 650 fitted with $A_w$ value set 0628 0024.
4. %WC measured by drying at 105°C for 4 hrs. N/A = not applicable

For all of the carrier materials used the number of colony forming units (CFU) is high in the dried carriers irrespective of the carrier material used and the drying procedure, although in most cases the number of CFU is higher in the slowly dried carrier, The percentage of colony forming units that can be re-isolated from coated seeds is consistently higher for PEMF treated bacteria than from untreated bacteria.

If no carrier material is used, no or very low numbers (1-100) of bacteria can be isolated from coated seeds.

Thus, it is clear that PEMF-treatment alone will not enhance the survival of bacteria after the coating onto seeds. On the other hand the combination of loading a bacterial culture into a carrier (with a low natural water holding capacity) and PEMF-treatment (either before or after mixing the culture into the carrier material) enhances the immediate survival of the bacteria that can be re-isolated from the seeds.

Here we show that after dehydration to a state where the water activity is below the level for active growth of bacteria (dormant state) an enhanced vigour is found in PEMF-treated cells, as can be seen from the better survival of colony forming units after application onto seeds.

The slowly dried carriers were stored at 10°C for 322 days and the number of bacteria able to form colonies (CFU) per gram of carrier was determined: The results can be seen in the table below:

| PEMF treatment | Carrier | | |
|---|---|---|---|
| | Clinoptilolite | Vermiculite | Bentonite |
| None | $3,80 \times 10^8$ | $4,60 \times 10^6$ | $6,50 \times 10^8$ |
| Culture | $4,45 \times 10^8$ | $1,90 \times 10^7$ | $9,50 \times 10^8$ |
| Carrier | $9,40 \times 10^8$ | $5,50 \times 10^6$ | $9,50 \times 10^8$ |

As can be seen from the above, the survival of bacteria able to form colonies after plating is high in Clinoptilolite and Bentonite, and particularly high following PEMF treatment (2mV/cm at 50Hz, 55V). The survival in Vermiculite is decreased compared with Clinoptilolite and Bentonite, but is still enhanced by PEMF treatment compared with the untreated control.

The coated sugar beet seeds were stored at 15°C for 6 months. The number of bacteria per seed was determined as previously described (CFU/seed). The results for storage for 2 days, 28 days and 182 days after coating are given in the table below

| Carrier Material | PEMF-treatment | Days after coating | | | |
|---|---|---|---|---|---|
| | | 2 days | 28 days | 182 days | |
| | | CFU/seed | CFU/seed | CFU/seed | % surv.[1] |
| Clinoptilolite | None | $5,5 \times 10^4$ | $8,5 \times 10^3$ | $7,5 \times 10^2$ | 0,1% |
| | Culture | $9,5 \times 10^4$ | $3,3 \times 10^4$ | $5,2 \times 10^3$ | 1,6% |
| | Carrier | $3,9 \times 10^5$ | $1,7 \times 10^5$ | $2,7 \times 10^4$ | 2,1% |
| Vermiculite | None | $9,5 \times 10^4$ | $3,2 \times 10^4$ | $5,8 \times 10^3$ | 0,6% |
| | Culture | $1,2 \times 10^5$ | $7,3 \times 10^4$ | $1,1 \times 10^4$ | 1,4% |
| | Carrier | $7,5 \times 10^4$ | $3,4 \times 10^4$ | $1,6 \times 10^4$ | 2,9% |

(continued)

| | | CFU/seed | CFU/seed | CFU/seed | % surv.[1] |
|---|---|---|---|---|---|
| Bentonite | None | 2,4x10$^5$ | 1,3x10$^5$ | 1,3x10$^4$ | 1,1% |
| | Culture | 7,6x10$^5$ | 1,9x10$^5$ | 5,2x10$^4$ | 4,1% |
| | Carrier | 1,7x10$^5$ | 5,1x10$^4$ | 1,2x10$^4$ | 2,5% |

1. % surv: Percentage of expected number of colony forming units as calculated by the formula:

$$(CFU/seed) \times 100{,}000\,seeds/(CFU/g\ carrier \times 60g).$$

As can be seen from the above figures, the survival of bacteria treated with PEMF (2mV/cm at 50Hz, 55V) either during the bacterial culture before mixing with carrier or treated with PEMF (2mV/cm at 50Hz, 55V) after mixing into the carrier is increasing over time relative to the non-PEMF treated controls. For bacteria in clinoptilolite the increase is more than 10-fold at day 182 after coating, and in vermiculite and bentonite the increase is 2-5-fold.

**EXAMPLE 5: Effect of initial proportion of bacterial culture:carrier.**

Bacteria in general are very sensitive to acidic stress. Exposure of bacteria to low pH for a given period of time followed by plate-counting gives a measure for the stress tolerance of a bacterial culture. An experiment was performed to investigate the stress tolerance as a function of the initial proportion in which the bacterial culture was mixed with the carrier material.

Liquid cultures of *Pseudomonas fluorescens* strain 96.578 were grown overnight at 20°C in LB and LB supplemented with 100mM sucrose. The cultures were mixed into sterilised Clinoptilolite carriers in different proportions of bacterial culture to dry carrier (from approx. 1:5 to approx. 1:2). After blending the culture:carrier mixtures holding more than 20.4% bacterial suspension were dried to 20.4% by air in a laminar air flow bench. The carrier containing 20.4% bacterial culture was not dried further. Following this, the carriers were bagged and incubated for 7 days at 10°C. The carriers were then dried to approx. 5% moisture by incubating the carriers in trays at a 32.5% relative moisture level for four days. After drying to 5% moisture level, the carriers were stored in sealed plastic bags for 14 days, whereafter the colony forming units per gram carrier was determined by mixing 1 gram of carrier with 10ml of water or with 10ml of a 100mM citrate buffer, pH4,5. After 30min in these media, bacteria were plated onto L,B-plates and colony forming units were counted. The proportion of colony forming bacteria after exposure to acidic stress was calculated relative to the same culture exposed to pure water.

Bacterium DS96 578, cultured in LB medium or LB supplemented with 100mM sucrose:

CFU/g carrier in dried carrier 14 days after drying to 5%:

| | Culture medium: LB | | | Culture medium: LB+100mM Sucrose | | |
|---|---|---|---|---|---|---|
| Millilitre bacterial suspension/ 100 gram clinoptilolite carrier (bacterial suspension: carrier (w/w)) | CFU/g carrier after 30min in water | CFU/g carrier after 30min in buffer, pH4 5 | | CFU/g carrier after 30min in water | CFU/g carrier after 30min in buffer, pH4,5 | |
| 20.4 (approx 1:5) | 4.40x10$^7$ | 1.05x10$^7$ | 24 % | 1.85x10$^8$ | 1.80x10$^8$ | 97 % |
| 23 8 (approx 1:4) | 2.00x10$^7$ | 2.60x10$^6$ | 13 % | 2.35x10$^7$ | 136x10$^7$ | 58 % |
| 31.0 (approx 1:3) | 6,75x10$^6$ | 9,50x10$^4$ | 1% | 1.25x10$^8$ | 5.55x10$^7$ | 44 % |

(continued)

| Millilitre bacterial suspension/ 100 gram clinoptilolite carrier (bacterial suspension: carrier (w/w)) | Culture medium: LB | | | Culture medium: LB+100mM Sucrose | | |
|---|---|---|---|---|---|---|
| | CFU/g carrier after 30min in water | CFU/g carrier after 30min in buffer, pH4 5 | | CFU/g carrier after 30min in water | CFU/g carrier after 30min in buffer, pH4,5 | |
| 52 2 (approx 1:2) | $1.65 \times 10^6$ | $350 \times 10^4$ | 2% | $7\ 90 \times 10^6$ | $200 \times 10^5$ | 3% |

As can be seen from the table above, the absolute number of culturable bacteria in the carriers as well as the proportion of bacteria able to withstand exposure to low pH for 30min increase with decreasing proportion of bacterial suspension to clinoptilolite carrier at blending time. The increased tolerance of the microorganisms to exposure to low pH indicate, that the bacterial populations in mixtures where the bacterial culture to carrier is below a ratio of approx. 1: 4 are in better condition for withstanding stress, such as prolonged storage at low moisture levels or physical stress, such as the handling of the carriers, i.e. application of carriers to seeds

**EXAMPLE 6: The importance of the mixing ratio at the initial blending of bacterial culture with the carrier.**

7 *Pseudomonas* strains and 1 *Flavobacterium* strain (DS00.135) were cultured overnight in liquid LB Following the liquid culture, the bacteria were diluted 10 times with fresh LB-medium and mixed with sterilised Clinoptilolite in the ratio 50ml bacterial culture to 100g Clinoptilolite (1:2) or 23ml bacterial culture to 100g clinoptilolite (1:4). After gently mixing, the 1:2 culture:Clinoptilolite mixture was slowly airdried to 123g whereas the 1:4 culture:Clinoptilolite mixtures were not dried. Thus, at this stage all carriers hold the same amount of moisture The bacterial cultures:clinoptilolite mixtures were then incubated at 10°C for 10days. No PEMF-treatment was done After 10days of incubation the bacterial culture:Clinoptilolite mixtures were dried to 4-6% moisture content (w/w) by placing the mixtures at trays in an atmosphere with 35% humidity for 4 days. After drying the dried culture:clinoptilolite mixtures were coated onto pelleted sugar beet seeds and the number of culturable bacteria per seed (CFU/seed) was determined by counting colonies after duplicate platings of dissolved sugar beet pellets onto solid LB-medium. The results can be found in the table below. It clearly shows the importance of not using too much bacterial cultures when mixing with the carrier.

| | CFU/seed | |
|---|---|---|
| | 1:2 | 1:4 |
| DS00.100 | 0 | $5,00 \times 10^1$ |
| DS96.297 | $3,30 \times 10^3$ | $1,40 \times 10^4$ |
| DS01.116 | $5,00 \times 10^1$ | $1,60 \times 10^4$ |
| DS01.109 | 0 | $2,90 \times 10^4$ |
| DS00.103 | $4,00 \times 10^2$ | $5,60 \times 10^4$ |
| DS00.102 | 0 | $7,75 \times 10^4$ |
| DS96,578 | $1,70 \times 10^3$ | $8,00 \times 10^4$ |
| DS00.135 | $1,05 \times 10^4$ | $2,25 \times 10^5$ |

**EXAMPLE 7: Very low mixing ratio at the initial blending of bacterial culture with the carrier.**

The example given below illustrates that also a very low mixing ratio at the initial blending of bacterial culture with carrier will result in an even distribution of high numbers of bacteria after coating seeds with the dried bacterial culture:carrier mixture.

*Pseudomonas* strain DS00.103 was cultured overnight in liquid LB medium supplemented with 50mM sucrose. The last 8 hours of culture the culture was exposed to PEMF (2mV/cm at 50Hz, 55V). Following the PEMF treatment in the liquid culture, the bacterial culture was diluted 10 times with fresh LB medium to $1,15 \times 10^8$ CFU/mL 7ml, 8ml, 9ml or 10ml of the diluted bacterial culture was mixed into 50g Bentonite carrier (this equates with a culture:carrier ratio of 1: 7.1, 1:6.25, 1:5.5 and 1:5, respectively) bagged and incubated for 7 days at 10°C. During the incubation period the bacterial population grew to between $5 \times 10^8$ and $1,3 \times 10^9$ bacteria/gram bacterial carrier. After incubation the culture: carrier mixtures were dried to about 5% moisture content by placing the mixtures in a chamber with 35% relative humidity for 3 days. The so dried bacterial culture:carrier mixtures were grinded to fine powders and the 8ml/50g and the 10 ml/ 50g mixtures were coated onto sugar beet seed pellets (60g mixture/100,000 seed pellets). The average number of colony forming units per seed was determined by dissolving 25 seed pellets in a 0,9% NaCl-solution for 30min followed by plating 100 microlitre of this solution on solid LB-medium. To determine the number of colony forming units per single seed, single seed pellets from each treatment were dissolved in 0,9% NaCl-solutions and plated on solid LB-medium.

For each initial blending variable the number of colony forming bacteria per gram of carrier, the moisture content in the dried carriers and the average number of colony forming bacteria per seed is given in the table below:

| MI per 50g Carrier | CFU/g dry carrier | Moisture content in dried carrier | Coating code | CFU/seed |
|---|---|---|---|---|
| 7 | $5,25 \times 10^8$ | 5,2 | | |
| 8 | $8,70 \times 10^8$ | 5,2 | /657 | $2,0 \times 10^5$ |
| 9 | $1,29 \times 10^9$ | 5,4 | | |
| 10 | $1,12 \times 10^9$ | 4,8 | /658 | $1,4 \times 10^5$ |

The numbers of colony forming bacteria per seed pellet in 20 randomly chosen individual pellets are given in the table below in increasing order.

| Seed Pellet no. | Coating /657 CFU/seed | Coating /658 CFU/seed |
|---|---|---|
| 1 | $4,75 \times 10^4$ | $1,50 \times 10^4$ |
| 2 | $5,10 \times 10^4$ | $2,50 \times 10^4$ |
| 3 | $6,00 \times 10^4$ | $3,40 \times 10^4$ |
| 4 | $8,00 \times 10^4$ | $4,35 \times 10^4$ |
| 5 | $8,50 \times 10^4$ | $4,90 \times 10^4$ |
| 6 | $9.50 \times 10^4$ | $6,05 \times 10^4$ |
| 7 | $1,05 \times 10^5$ | $8,00 \times 10^4$ |
| 8 | $1,20 \times 10^5$ | $9,00 \times 10^4$ |
| 9 | $1,2.5 \times 10^5$ | $1,00 \times 10^5$ |
| 10 | $1,30 \times 10^5$ | $1,05 \times 10^5$ |
| 11 | $1,35 \times 10^5$ | $1,25 \times 10^5$ |
| 12 | $1,80 \times 10^5$ | $1,35 \times 10^5$ |
| 13 | $1,95 \times 10^5$ | $1,45 \times 10^5$ |
| 14 | $1,95 \times 10^5$ | $1,55 \times 10^5$ |
| 15 | $1,95 \times 10^5$ | $1,70 \times 10^5$ |
| 16 | $2,00 \times 10^5$ | $1,90 \times 10^5$ |
| 17 | $3,55 \times 10^5$ | $2,05 \times 10^5$ |
| 18 | $4,40 \times 10^5$ | $3,20 \times 10^5$ |
| 19 | $9,35 \times 10^5$ | $4,60 \times 10^5$ |
| 20 | $1,18 \times 10^6$ | $7,55 \times 10^5$ |

As is clear from the two tables above, the number of bacteria per gram of carrier is high even when the ratio of bacterial culture to carrier is below 1:5. What is also clear is that the precision in the application of bacteria from carriers with these low bacterial culture:carrier mixtures to seed is sufficiently good to be of practical use for coating bacteria onto seeds. The uniform distribution on single seed in this experiment strongly indicate that the bacteria will be evenly spread in the carrier material at initial culture:carrier mixing ratios at and below 1:5 (wt/wt).

**EXAMPLE 8: Clinoptilolite carrier dried to different moisture contents**

*Pseudomonas fluorescens* was cultured overnight in liquid LB-medium, supplemented with 10mM Trehalose. Following the liquid culture, the bacterial suspension was diluted 10 times with fresh LB-medium and 52ml of the culture was mixed into 100g Clinoptilolite carrier with a natural water content of 5 5%. The mixture was then air dried to about 22% moisture content, bagged and incubated for 10days at 10°C. Following the incubation time the culture:carrier mixture was dried to different moisture contents by placing the mixture in 35% relative humidity for different periods of time (Up to 4 days). The actual moisture content of the dried carriers was determined by measuring the weight loss after heating a sample of the carrier to 105°C for 4 hours. The experiment was repeated three times. The numbers of colony forming bacteria per gram of carrier at day 0 were determined after plating on solidified medium The carriers were stored for 365 days in sealed platic bags at 10°C and the numbers of colony forming bacteria per gram of carrier were determined. The table below shows the results in this regard:

| CFU/g | Moisture content in carrier | | | | | |
|---|---|---|---|---|---|---|
| day | 5-7,5% | 7,5-10% | 10-12,5% | 112,5-15% | 20-25% | 25-30% |
| 0 | 9,17E+05 | 5,00E+07 | 4,67E+07 | 2,25E+07 | 1,97E+09 | 2,00E+09 |
| 365 | 4,37E+05 | 6,78E+06 | 2,50E+05 | 3,75E+03 | 7,95E+07 | 3,23E+08 |

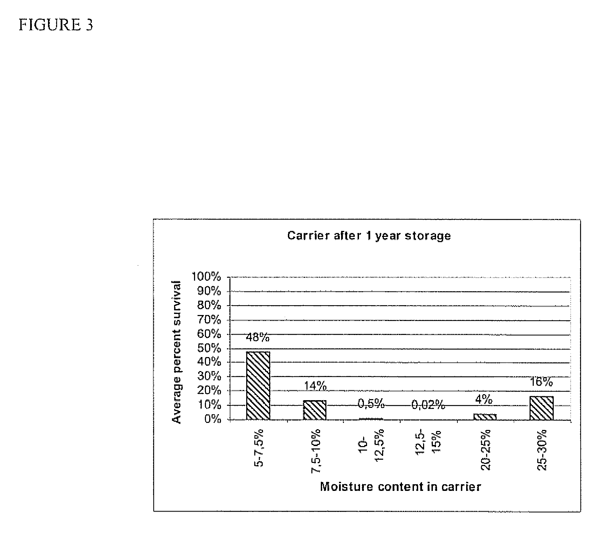

The average percentage survival of *Pseudomonas fluorescens* compared with moisture content of the carrier is shown in Figure 3

As can be seen from the results, storage of cells in a dry carrier results in less relative loss of viable (colony forming units) bacteria. Storage of bacteria in the same carrier at moisture contents between 7.5% and up to 20% results in a dramatic relative loss of viable cells.

All publications mentioned in the above specification are herein incorporated by reference. Various modifications and variations of the described methods and system of the present invention will be apparent to those skilled in the art without departing from the scope and spirit of the present invention. Although the present invention has been described in connection with specific preferred embodiments, it should be understood that the invention as claimed should not be unduly limited to such specific embodiments. Indeed, various modifications of the described modes for carrying out the invention which are obvious to those skilled in biochemistry and biotechnology or related fields are intended to be within the scope of the following claims.

The invention is further defined according to the following numbered paragraphs:

1. A process for preparing a composition comprising dried microorganisms, comprising culturing one or more species of a microorganism; admixing the cultured microorganism with one or more carriers; treating the microorganism with pulsed electromagnetic fields; incubating the culture: carrier mixture for at least about 6 hours; and drying the microorganism so as to reduce the moisture level to between about 1 wt % to about 6 wt %.

2. A process according to paragraph 1, wherein the microorganism is one or more of fungi, yeasts, bacteria, algae or protozoans.

3. A process according to paragraph 2 wherein the yeast is from one or more of the following genera *Candida, Cryptococcus, Cystofilobasidium, Hansenula, Kluyveromyces, Leucosporidium, Metschnikowia, Pichia, Rhodosporidium, Rodotorula, Saccharomyces, Sporobolomyces, Richosporon.*

4. A process according to paragraph 2 wherein the fungus is from one or more of the following genera *Acrophialospora, Ampelomyces, Aureobasidium, Bipolaris, Chaetomium, Cladorrhinum, Clonostachys, Coniothyrium, Epicoccum, Gliocladium, Glomus, Fusarium, Laetisaria, Microsphaeropsis, Mycothecium, Muscador, Mycoleptodiscus, Neocosmospora, Paecilomyces, Penicillium, Peniophora, Phlebiopsis, Phialophora, Pythium, Rhizoctonia, Rhizopus, Rhynchosporium, Sporidesmium, Stephanonectria, Talaromyces, Tilletiopsis, Trichoderma, Ulocladium,*

*Verticillium, Hirsutella, Myrothecium, Nematophthora, Dactylella, Acremonium, Catenaria, Cylindrocarpon, Dactylella, Monacrosporium, Pochonia.*

5. A process according to paragraph 2 wherein the bacteria is from one or more of the following genera *Actinoplanes, Agrobacterium, Arthrobacter, Bacillus, Bifidobacterium, Brevibacillus, Burkholderia, Chryseomonas, Comamonas, Enterobacter, Enterococcus, Erwinia, Flavobacterium, Lactobacillus, Lactococcus, Leuconostoc, Pasteuria, Pantoea, Paenibacillus, Pseudomonas, Rahnella, Raoultella, Serratia, Sporotrix, Stenotrophomonas, Streptococcus, Streptomyces, Rhizobium, Bradyrhizobium, Mezorhizobium, Sinorhizobium Seratia, Envinia, Streptomycetes* and *Nocardia.*

6. A process according to paragraph 2 wherein the bacterium is a non-spore forming bacterium.

7. A process according to paragraph 6 wherein the non-spore forming bacterium is selected from the group consisting of *Actinoplanes, Agrobacterium, Arthrobacter, Bifidobacterium, Brevibacillus, Burkholderia, Chryseomonas, Comamonas, Enterobacter, Enterococcus, Erwinia, Flavobacterium, Lactobacillus, Lactococcus, Leuconostoc, Pantoea, Pediococcus, Pseudomonas, Rahnella, Raoultella, Serratia, Sporotrix, Stenotrophomonas, Streptococcus, Streptomyces, Rhizobium, Bradyrhizobium, Mezorhizobium, Sinorhizobium Seratia, Erwinia, Streptomycetes* and *Nocardia.*

8. A process according to any one of the preceding paragraphs, wherein the carrier is one or more of the following: a zeolite carrier, a clay carrier, a earthy silicon compound.

9. A process according to paragraph 8 wherein the zeolite carrier is selected from one or more of the group consisting of: analcite, cancrinite, chabazite, clinoptilolite, cordierite, edingtonite, erionite, faujasite, ferrierite, gmelinite, heulandite, laumontite, levynite, mesolite, mordenite, natrolite, offretite, paulingite, phillipsite, ptilolite, scolecite, thomsonite, ZSM and ZK.

10. A process according to any one of paragraphs 8 or 9 wherein the zeolite carrier is clinoptilolite.

11. A process according to paragraph 8 wherein the clay carrier is one or more of the following clays: attapulgite, bentonite, fuller's earth, halloysite, illite, kaolin, pyrophyllite, vermiculite, sepiolite, montmorillonite and mulite

12. A process according to paragraph 8 wherein the earthy silicon compound is one or more of the following: asbestos, diaspore, diatomaceous earth, diatomite, feldspar, guhr, kieselguhr, mica, quartz, sand and silica.

13. A process according to any one of the preceding paragraphs wherein the cultured microorganism and the carrier are blended such that the culture to carrier ratio is less than 1.4 (w/w).

14. A process according to any one of the preceding paragraphs wherein the cultured microorganism and the carrier are blended such that the culture to carrier ratio is about or less than 1:5.

15. A process according to any one of the preceding paragraphs wherein the PEMF-treatment is carried out at one or more of the following stages: during the culturing of the microorganism; during admixing the cultured microorganism with the carrier; after admixing the cultured microorganism with the carrier; during the (optional) incubation of the culture:carrier mixture; during drying of the culture:carrier mixture; at any time after application of said mixture onto a seed or seed component; at any time after drying of the culture:carrier mixture; at any time after re-hydration of the dried culture:carrier mixture.

16. A process according to paragraph 15, wherein the PEMF-treatment is carried out during the culturing of the microorganism.

17. A process according to paragraph 15, wherein the PEMF-treatment is carried out during the culturing of the microorganism and again during the incubation of the culture:carrier mixture.

18. A process according to paragraph 15 wherein there is only one PEMF-treatment.

19. A process according to paragraph 15 wherein there is more than one PEMF-treatment.

20. A process according to paragraph 1 wherein the culture:carrier mixture is incubated for 0 to 14 days.

21. A composition comprising dried microorganisms prepared by the process according to any one of paragraphs 1-20.

22. Use of a process according to any one of paragraphs 1-20 to prolong the shelf-life of dried, dormant microorganisms.

23. Use of a dried microorganism in the preparation of coated plant seed or other plant propogative material, comprising coating the plant seed or other plant propagative material with a composition comprising dried microorganisms prepared by the process according to any one of paragraphs 1-20.

24. The use of a dried microorganism in the preparation of a growth medium, comprising admixing the composition comprising dried microorganisms prepared by the process according to any one of paragraphs 1-20 with soil.

25. The use of a dried microorganism in waste water treatment, comprising contacting a composition comprising dried microorganisms prepared by the process according to any one of paragraphs 1-20 with waste water and separating the treated water from the composition.

26. The use in combination of admixing the cultured microorganism with one or more carriers and treating the microorganism with pulsed electromagnetic fields in the manufacture of a composition comprising dried microorganism, wherein said dried microorganisms have significantly enhanced shelf-life.

**Claims**

1. A composition comprising dried microorganisms, obtainable by a process comprising:

   culturing one or more species of a microorganism;
   admixing the cultured microorganism with one or more zeolite carriers such that the culture to carrier ratio is less than 1:4 (w/w);
   treating the microorganism with pulsed electromagnetic fields;
   incubating the culture: carrier mixture for at least 6 hours; and
   drying the microorganism so as to reduce the moisture level to between I wt % to 6 wt %.

2. A composition according to claim 1, wherein the microorganism is one or more of fungi, yeasts, bacteria, algae or protozoans.

3. A composition according to claim 2 wherein the yeast is from one or more of the following genera: *Candida, Cryptococcus, Cystofilobasidium, Hansenula, Kluyveromyces, Leucosporidium, Metschnikowia, Pichia, Rhodosporidium, Rodotorula, Saccharomyces, Sporobolomyces, Richosporon.*

4. A composition according to claim 2 wherein the fungus is from one or more of the following genera: *Acrophialospora, Ampelomyces, Aureobasidium, Bipolaris, Chaetomium, Cladorrhinum, Clonostachys, Coniothyrium, Epicoccum, Gliocladium, Glomus, Fusarium, Laetisaria, Microsphaeropsis, Mycothecium, Muscador, Mycoleptodiscus, Neocosmospora, Paecilomyces, Penicillium, Peniophora, Phlebiopsis, Phialophora, Pythium, Rhizoctonia, Rhizopus, Rhynchosporium, Sporidesmium, Sporothrix, Stephanonectria, Talaromyces, Tilletiopsis, Trichoderma, Ulocladium, Verticillium, Hirsutella, Myrothecium, Nematophtora, Acremonium, Catenaria, Cylindrocarpon, Dactylella, Monacrosporium*, and *Pochonia.*

5. A composition according to claim 2 wherein the bacteria is from one or more of the following genera: *Actinoplanes, Agrobacterium, Arthrobacter, Bacillus, Bifidobacterium, Brevibacillus, Burkholderia, Chryseomonas, Comamonas, Enterobacter, Enterococcus, Erwinia, Flavobacterium, Lactobacillus, Lactocaccus, Leuconostoc, Pasteuria, Pantoea, Paenibacillus, Pseudomonas, Rahnella, Raoultella, Serratia, Stenotrophomonas, Streptococcus, Streptomyces, Rhizobium, Bradyrhizobium, Mezorhizobium, Sinorhizobium, Streptomycetes* and *Nocardia.*

6. A composition according to claim 2 wherein the bacterium is a non-spore forming bacterium.

**7.** A composition according to claim 6 wherein the non-spore forming bacterium is selected from the group consisting of *Actinop/anes, Agrobacterium, Arthrobacter, Bifidobacterium, Brevibacillus, Burkholderia, Chryseomonas, Comamonas, Enterobacter, Enterococcus, Erwinia, Flavobacterium, Lactobacillus, Lactococcus, Leuconostoc, Pantoea, Pediococcus, Pseudomonas, Rahnella, Raoultella, Serratia, , Stenotrophomonas, Streptococcus, Streptomyces, Rhizobium, Bradyrhizobium, Mezorhizobium, Sinorhizobium, Streptomycetes* and *Nocardia.*

**8.** A composition according to claim 1 wherein the zeolite carrier is selected from one or more of the group consisting of: analcite, cancrinite, chabazite, clinoptilolite, cordierite, edingtonite, erionite, faujasite, ferrierite, gmelinite, heulandite, laumontite, levynite, mesolite, mordenite, natrolite, offretite, paulingite, phillipsite, ptilolite, scolecite, thomsonite, ZSM and ZK.

**9.** A composition according to claim 8 wherein the zeolite carrier is clinoptilolite.

**10.** A composition according to claim 1 wherein the cultured microorganism and the carrier are blended such that the culture to carrier ratio is equal to or less than 1:5.

**11.** A composition according to claim 1 wherein the pulsed electromagnetic fields treatment is carried out at one or more of the following stages: during the culturing of the microorganism; during admixing the cultured microorganism with the carrier; after admixing the cultured microorganism with the carrier; during the (optional) incubation of the culture: carrier mixture; during drying of the culture:carrier mixture; at any time after application of said mixture onto a seed or seed component; at any time after drying of the culture:carrier mixture; at any time after re-hydration of the dried culture:carrier mixture.

**12.** A process according to claim 1 wherein the culture:carrier mixture is incubated for 0 to 14 days.

**13.** A method of preparing a coated plant seed or other plant propagative material, comprising coating the plant seed or other plant propagative material with a composition comprising dried microorganisms according to claim 1

**14.** A method of preparing a growth medium, comprising admixing the composition comprising dried microorganisms according to claim 1 with soil.

**15.** A method of treating waste water, comprising contacting a composition comprising dried microorganisms according to claim 1 with waste water and separating the treated water from the composition.

FIGURE 1

FIGURE 2

FIGURE 3

Carrier after 1 year storage

Europäisches
Patentamt

European
Patent Office

Office européen
des brevets

# EUROPEAN SEARCH REPORT

Application Number

EP 11 18 5827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 374 698 A1 (ULTRA BIOTECH LTD [GB]) 2 January 2004 (2004-01-02) * claims 1,4-5,7,15 * * paragraphs [0073], [0078], [0082] * | 1-11, 13-15 | INV. C12N1/04 C12N11/14 C12N13/00 A23B9/28 C02F3/00 |
| A,D | WO 92/08355 A (LIPHATECH, INC) 29 May 1992 (1992-05-29) * the whole document * | 1-14 | |
| A,D | WO 01/15774 A (BIOFIELDS APS; DISSING, STEEN; UNDEN, MOGENS; LARSEN, TEDDY, HEBO; SCH) 8 March 2001 (2001-03-08) * example 3 * * claim 27 * | 12,13 | |
| A | BASHAN Y: "Inoculants of plant growth-promoting bacteria for use in agriculture", BIOTECHNOLOGY ADVANCES, ELSEVIER PUBLISHING, BARKING, GB, vol. 16, no. 4, July 1998 (1998-07), pages 729-770, XP004123985, ISSN: 0734-9750 * page 735 - page 739 * * page 746 * | 1-15 | TECHNICAL FIELDS SEARCHED (IPC) C02F |
| A | TENGERDY R P ET AL: "Perspectives in agrobiotechnology", JOURNAL OF BIOTECHNOLOGY, ELSEVIER SCIENCE PUBLISHERS, AMSTERDAM, NL, vol. 66, no. 2-3, 11 December 1998 (1998-12-11), pages 91-99, XP004154142, ISSN: 0168-1656 * paragraph 3 * | 1-15 | |

The present search report has been drawn up for all claims

| Place of search | Date of completion of the search | Examiner |
|---|---|---|
| The Hague | 26 January 2012 | Sonnerat, Isabelle |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 11 18 5827

This annex lists the patent family members relating to the patent documents cited in  the above-mentioned European search report.
The members are as contained in the European Patent Office EDP file on
The European Patent Office is in no way liable for these particulars which are merely given for the purpose of information.

26-01-2012

| Patent document cited in search report | | Publication date | Patent family member(s) | | Publication date |
|---|---|---|---|---|---|
| EP 1374698 | A1 | 02-01-2004 | AU | 2003204755 A1 | 15-01-2004 |
| | | | CA | 2432331 A1 | 18-12-2003 |
| | | | EP | 1374698 A1 | 02-01-2004 |
| | | | US | 2003235568 A1 | 25-12-2003 |
| WO 9208355 | A | 29-05-1992 | AR | 243313 A1 | 31-08-1993 |
| | | | CA | 2073507 A1 | 14-05-1992 |
| | | | EP | 0510188 A1 | 28-10-1992 |
| | | | US | 5695541 A | 09-12-1997 |
| | | | WO | 9208355 A1 | 29-05-1992 |
| WO 0115774 | A | 08-03-2001 | AT | 336281 T | 15-09-2006 |
| | | | AU | 776835 B2 | 23-09-2004 |
| | | | AU | 6819800 A | 26-03-2001 |
| | | | DE | 60030139 T2 | 23-08-2007 |
| | | | DK | 1216076 T3 | 27-12-2006 |
| | | | EP | 1216076 A2 | 26-06-2002 |
| | | | ES | 2270865 T3 | 16-04-2007 |
| | | | HK | 1047717 A1 | 26-01-2007 |
| | | | PT | 1216076 E | 31-01-2007 |
| | | | WO | 0115774 A2 | 08-03-2001 |

EPO FORM P0459

For more details about this annex : see Official Journal of the European Patent Office, No. 12/82

**EP 2 426 195 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5695541 A
- US 6561968 B
- US 6561968 A